Europäisches Patentamt

European Patent Office

Office européen des brevets

(11) Publication number: **0 431 690 A1**

# EUROPEAN PATENT APPLICATION

(21) Application number: 90203174.9

(22) Date of filing: 30.11.90

(51) Int. Cl.5: **B60P 7/13**, B61D 45/00, B65D 88/12

(30) Priority: 07.12.89 NL 8903019

(43) Date of publication of application:
12.06.91 Bulletin 91/24

(84) Designated Contracting States:
AT BE CH DE DK ES FR GB GR IT LI LU NL SE

(71) Applicant: DE ARK B.V.
Gezellenstraat 21
NL-3861 RD Nijkerk(NL)

(72) Inventor: Van den Pol, Aart Antonie
Coltoflaan 10
NL-3862 AG Nijkerk(NL)

(74) Representative: de Bruijn, Leendert C. et al
Nederlandsch Octrooibureau
Scheveningseweg 82 P.O. Box 29720
NL-2502 LS 's-Gravenhage(NL)

(54) Locking device for container.

(57) A device for locking a container (13) on a supporting face (1), such as the top face of a railway wagon, in which the container (13) can be accommodated on and shifted over a supporting frame (20) which can be rotated on said supporting face (1) and which is provided at one end with end stops for the container (13), can be fitted on said supporting face (1) and contains a retaining device (10, 11) which is suitable for interacting with gripping means (12) situated at the end wall of the container (13) facing away from the end stops, and can be moved between a rest position in which it is not interacting with the gripping (12) and a working position in which it is interacting with the gripping devices (12), in such a way that the container (13) is prevented from moving off said supporting face (1). The retaining device may be a hook (10) device fitted on a shaft (3-5) which can be supported rotatably on the supporting face (1) running transverse over said supporting face (1), which hook (10) in the working state encloses the gripping means at the side facing away from the container (13) and the side facing away from the supporting face (1).

fig-1

## LOCKING DEVICE FOR CONTAINER

The invention relates to the field concerning the transportation of containers. Containers with standard dimensions can be accommodated during transportation on a supporting face of a rail wagon, in particular on a rotary supporting frame with which the containers are unloaded from the rail wagon and loaded onto it at the side. In this case a container is moved during loading onto the supporting frame which has been swung outwards at an angle. This supporting frame is subsequently swung back until the lengthwise direction of the container coincides with the lengthwise direction of the wagon.

In this position the container can be transported further on the rail wagon. In this case it is accommodated in the lengthwise direction between end stops which are provided to hold the container during impact loads in the lengthwise direction such as those occurring, for example, during shunting.

The containers have not been so well protected hitherto against impact loads in the vertical direction. The result of this is that in extreme cases they can make brief jumping movements, which could cause them to spring off the supporting frame, something which is, of course, to be avoided.

The object of the invention is therefore to provide a device by means of which containers can be prevented from jumping up during transportation. To this end, the invention provides a device for locking a container on a supporting face, such as the top face of a railway wagon, in which the container can be accommodated on and shifted over a supporting frame which can be rotated on said supporting face and which is provided at one end with end stops for the container, while the device can be fitted on said supporting face at the end facing away from the supporting face end near the end stops, which device contains a retaining device which is suitable for interacting with gripping means situated at the bottom side in the centre of the end wall of the container facing away from the end stops, and can be moved between a rest position in which it is not interacting with the gripping means and a working position in which it is interacting with the gripping means, in such a way that the container is prevented from moving off said supporting face.

The retaining device can be designed in various ways, but the preferred embodiment is that in which the retaining device is a hook fitted on a shaft which can be supported rotatably on the supporting face running transverse over said supporting face, which hook in the working state encloses the gripping means at the side facing away from the container and the side facing away from the supporting face.

The container can be secured in a reliable manner against jumping up by means of the above-mentioned hook. The end stops provided on the supporting frame are of an already known design, protecting the container against vertical jumping movements, so that the container can now be held reliably at both ends.

The shaft is preferably provided with a counterweight and with a stop, in such a way that under the influence of the counterweight the hook is held in the working position, which is determined by the position of the shaft in which the stop is in contact.

The whole device can be folded up when not in use, and can thus be taken completely outside the path of the rotary frame with container, in the embodiment in which the hook is rotatable relative to the shaft, and the hook and the shaft each have a bearing face in such a way that when the stop is contacting and the hook is in the working position the bearing faces interact with each other.

According to a simple embodiment, the counterweight can be a strip of metal which is welded on the shaft parallel to the axis thereof, and of which the end facing away from the shaft has a stop face which can rest on the supporting face.

In order to ensure that the hook does not flap back to the non-working position in the event of any impact loads such as those occurring, for example, during shunting, the device can be designed in such a way that in the case of a contacting stop face the strip of metal runs at an angle of approximately 30° relative to the horizontal towards the supporting face. The mass of the strip of metal is so great that inertia forces acting on said strip during impact loads exert a moment on the rotary shaft which is smaller than that exerted by the gravity force acting on the hook. This means that the hook remains in the working position.

According to a special embodiment, the shaft can be provided with blocking means which in the working position of the hook can interact with locking means provided on the supporting face for locking of the rotary frame, in such a way that in the working position of the hook the locking means cannot be moved out of the locked position. his embodiment ensures that the rotary frame cannot be turned away when the hook is still interacting with the gripping devices on the container. This avoids the risk that the hook could be damaged by the rotary frame.

Conversely, so long as the locking means are not in their locked position, the shaft cannot be turned so far that the hook could reach the working position. In that position the blocking means knock against the projecting locking means, so that an indication is given of the fact that the rotary frame is still in the unlocked state.

The invention will be explained in greater detail below with reference to an example of an embodiment shown in the figures.

Figure 1 shows a view of the locking device according to the invention in perspective.

Figure 2 shows a side view of Figure 1, taken through the rotary shaft of the hook.

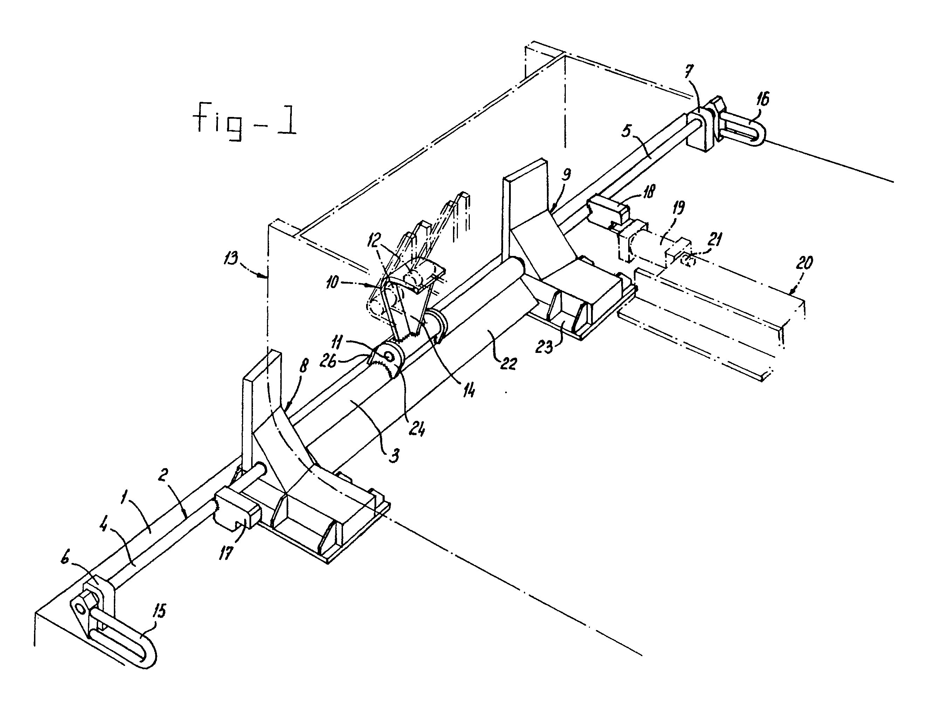

In the embodiment shown in Figure 1, the locking device according to the invention is fitted on a schematically shown supporting face 1, such as the surface of a railway wagon. The shaft 2 of the locking device comprises a central part 3 of relatively large diameter and two parts 4, 5 of relatively small diameter connecting thereto. The parts 4 and 5 are in each case rotatably mounted in the supports 6, 7 respectively and the stop elements 8, 9 respectively. The hook 10 is also fitted on the part 3 of the shaft 2 so that it pivots about pivot pin 11. In the position shown the hook is in the working position, in which it can interact with the shaft branches 12 (shown by dotted lines) of the container 13 (also shown by dotted lines). The centre plate 14 of the hook projects here between two branches 12. Such gripping devices in the form of shaft branches are generally known in containers, and are used for dragging the containers.

The shaft parts 4 and 5 are also provided at their ends with hand grips 15, 16 by means of which the shaft can be rotated, in such a way that the hook is movable between its working position and its rest position. This is achieved by flapping the hand grips 15, 16 out of the position shown, so that the hook comes to rest flat on the supporting face 1. The shaft parts 4 and 5 are also provided with blocking means 17, 18, which can interact with locking means 19 for the swivel frame 20 on which the container 13 can be accommodated. These locking means 19 and the swivel frame 20 are also shown schematically in part by dotted lines, and are known per se. In the working position of the hook the blocking means 18 interact with the locking means 19, in such a way that the locking pin 21 cannot be retracted through knocking against the blocking means 18. A corresponding design is, of course, found at the blocking means 17, but for the sake of clarity it is not shown. Even when no container is accommodated on the rotary frame the device according to the invention provides additional safety for the rotary frame. The blocking means 17, 18 in that situation also prevent the locking means from accidentally becoming unlocked, and thus increase the safety of the device.

When the container 13 is in the position shown, it is held horizontally by the stops 8, 9 on the one hand, and by stop means which are provided on the swivel frame 20, on the other. Moreover, the container now cannot jump upwards either, since the hook 10 is enclosing the shaft branches 12 from the top.

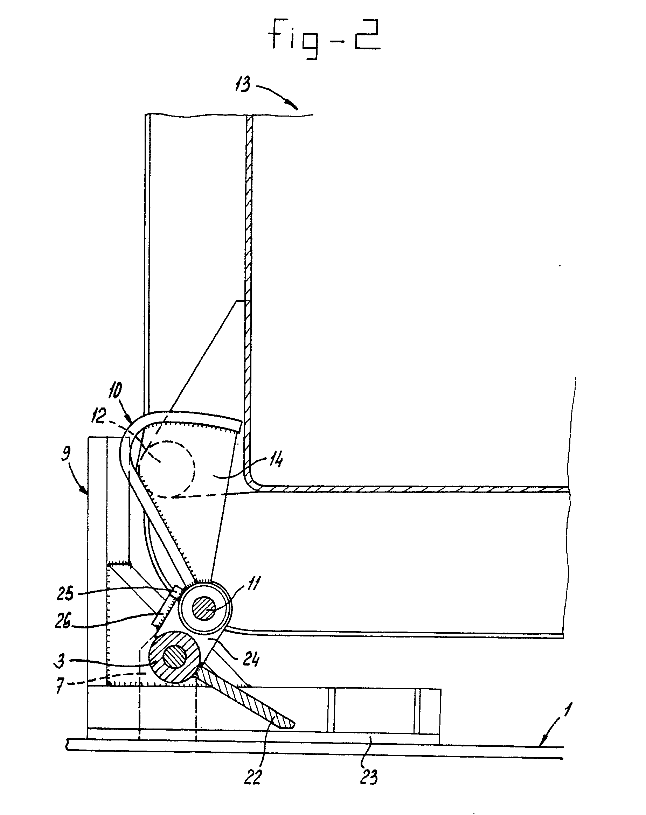

In order to prevent the hook from being able to swing to the rest position when impact loads occur, provision is also made for a ballast plate 22, which exerts such a couple on the shaft 3 that the hook 10 remains in the erect position even when it is exposed to impact load, for example through the wagons bumping into each other during braking or shunting. All this is shown in Figure 2.

Figure 2 shows that the ballast plate can rest on the supporting face 1, at least on the flanges 23 of the stops 9 and 8. It can also be seen clearly that in the working position of the hook the ballast plate 22 forms an angle of approximately 30° with the supporting face 1. It is also clear that arms 24, running at an angle of 90° relative to the supporting plate 2 and accommodating the pivot pin 11 for the hook 10, are provided. The hook 10 can pivot about said pivot pin 11, but its pivoting movement is limited by the bearing face 25 which is fixed to the hook. Said bearing face 25 can interact with a bearing face 26, in such a way that in the erect position of the hook the ballast plate 22 just rests on the flanges 23. When the shaft 3 is flapped to the left, the hook 10 can come to rest on the supporting face 1, in which case it can also pivot about the pin 11, in such a way that the ballast plate 22 comes to lie to the left of rotary shaft 3 in the drawing. In this way it is ensured that in the rest position the hook cannot flap into the working position again under the influence of the ballast weight 22.

## Claims

1. Device for locking a container on a supporting face, such as the top face of a railway wagon, in which the container can be accommodated on and shifted over a supporting frame which can be rotated on said supporting face and which is provided at one end with end stops for the container, while the device can be fitted on said supporting face at the end facing away from the supporting face end near the end stops, which device contains a retaining device which is suitable for interacting with gripping means situated at the end wall of the container facing away from the end stops, and can be moved between a rest position in which it is not interacting with the gripping means and a working position in which it is interacting with the gripping means, in such a way that the container is prevented from moving off said supporting face.

2. Device according to Claim 1, in which the retaining device is a hook device fitted on a shaft which can be supported rotatably on the supporting face running transverse over said supporting face, which hook in the working state encloses the gripping means at the side facing away from the container and the side facing away from the supporting face.

3. Device according to Claim 2, in which the shaft is provided with a counterweight and with a stop, in such a way that under the influence of the counterweight the hook is held in the working position, which is determined by the position of the shaft in which the stop is in contact.

4. Device according to Claim 2 or 3, in which the shaft is provided with a control device by means of which it is rotatable in such a way that the hook is movable between the rest position and the working position.

5. Device according to Claim 2, 3 or 4, in which the hook is rotatable relative to the shaft, and the hook and the shaft each have a bearing face, in such a way that when the stop is in contact and the hook is in its working position, the bearing faces interact with each other.

6. Device according to Claim 5, in which the counterweight is a strip of metal which is welded on the shaft parallel to the axis thereof, and of which the end facing away from the shaft has a stop face which can rest on the supporting face.

7. Device according to Claim 6, in which when the stop face is in contact the strip of metal runs at an angle of approximately 30° relative to the horizontal towards the supporting face.

8. Device according to Claim 7, in which the shaft is provided with arms in which the hook is suspended rotatably, said arms running at an angle of 90° relative to the strip of metal, in the direction facing away from of the stop face.

9. Device according to any of the preceding claims, in which the shaft is provided with blocking means, which in the working position of the hook can interact with locking means provided on the supporting face for locking the rotary frame, in such a way that in the working position of the hook the locking means cannot be moved out of the locked position.

Fig-1

Fig-2

# EUROPEAN SEARCH REPORT

Application Number

**EP 90 20 3174**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-1 456 673   (MASCHINENFABRIK AUGSBURG-NÜRNBERG AG)<br>* page 6, line 12 - page 8, line 23; figures *<br>— — — | 1-4 | B 60 P<br>7/13<br>B 61 D 45/00<br>B 65 D 88/12 |
| A | US-A-4 854 791   (BETHLEHEM STEEL CORPORATION)<br>* column 2, line 38 - column 3, line 51; figures *<br>— — — | 1-4 | |
| A | US-A-3 262 678   (STEADMAN INDUSTRIES LIMITED)<br>* figures *<br>— — — — — | 1-4 | |

| TECHNICAL FIELDS SEARCHED (Int. Cl.5) |
|---|
| B 60 P<br>B 61 D<br>B 65 D |

The present search report has been drawn up for all claims

| Place of search | Date of completion of search | Examiner |
|---|---|---|
| The Hague | 07 March 91 | FRANKS B.G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document